Europäisches Patentamt

European Patent Office

Office européen des brevets

(19)

(11) Veröffentlichungsnummer : **0 134 414**
**B1**

(12) **EUROPÄISCHE PATENTSCHRIFT**

(45) Veröffentlichungstag der Patentschrift :
30.07.86

(21) Anmeldenummer : 84106125.2

(22) Anmeldetag : 29.05.84

(51) Int. Cl.⁴ : **C 08 J 9/16, C 08 J 9/20,
C 08 L 25/02, C 08 F283/14
// (C08L25/02, 65:00)**

(54) **Feinteilige, expandierbare Styrolpolymerisate, die zur Herstellung schnellentformbarer Zellkörper geeignet sind.**

(30) Priorität : 14.07.83 DE 3325392

(43) Veröffentlichungstag der Anmeldung :
20.03.85 Patentblatt 85/12

(45) Bekanntmachung des Hinweises auf die Patenterteilung : 30.07.86 Patentblatt 86/31

(84) Benannte Vertragsstaaten :
BE DE FR GB IT NL SE

(56) Entgegenhaltungen :
DE-A- 1 769 374
DE-A- 3 138 401

(73) Patentinhaber : HÜLS AKTIENGESELLSCHAFT
Patentabteilung / PB 15 · Postfach 13 20
D-4370 Marl 1 (DE)

(72) Erfinder : Reese, Dirk, Dr.
Stargarder Strasse 32
D-4370 Marl (DE)
Erfinder : Rigler, Josef Karl, Dr.
Helgolandstrasse 16
D-4350 Recklinghausen (DE)

EP 0 134 414 B1

Jouve, 18, rue St-Denis, 75001 Paris, France

**0 134 414**

**Beschreibung**

Gegenstand der Erfindung sind expandierbare Styrolpolymerisate, die zur Herstellung schnellentformbarer Zellkörper geeignet sind, die in gleichmäßiger Verteilung eine darin umgesetzte, hochmolekulare Verbindung enthalten, die eine nicht kontinuierliche Phase bildet.

Es ist bekannt, schaumförmige Formkörper durch Expandieren blähfähiger, feinteiliger Styrolpolymerisate in Formen herzustellen. Nach diesem Verfahren werden kleinteilige, blähfähige Styrolpolymerisate zunächst mit Hilfe von Wasserdampf oder heißen Gasen einem sogenannten Vorschäumungsprozeß unterworfen. Die vorgeschäumten Teilchen werden zunächst gelagert und anschließend in perforierten Formen mit Heißdampf weiter aufgeschäumt und versintert. Nach diesem sogenannten Ausschäumen muß der Formkörper noch einige Zeit in der Form verbleiben, bis er so weit abgekühlt ist, daß er ohne Formänderung der Form entnommen werden kann. Diese Verweilzeit in der Form, die als Mindestformverweilzeit oder Kühlzeit bezeichnet wird, stellt eine Leerzeit dar, die man zum besseren Auslasten der Formen möglichst niedrig zu halten versucht.

Insbesondere expandierbare Styrolpolymerisate, die mit organischen Halogenverbindungen flammhemmend ausgerüstet sind, bilden leichter Produkte mit unregelmäßiger Zellstruktur. Aus solchen flammhemmend ausgerüsteten Teilchen hergestellte Schaumstoffblöcke neigen nach dem Entformen stärker zum Einfallen ihrer Seitenflächen (Blockschrumpf) und sind im Blockinnern eher schwächer verschweißt.

Beim Vorschäumen der Perlen soll vermieden werden, daß ein Teil der vorgeschäumten Perlen schrumpft. Dies führt dazu, daß gewünschte niedrige Dichten der Formkörper nicht erreicht werden. Außerdem ist mit dem Schrumpfen ein hoher Verlust an Treibmittel verbunden, was ebenfalls zu den zuvor erwähnten nachteilen, dem Blockschrumpf und der mangelnden Verschweißung im Innern des Formkörpers führt. Schließlich führt dies zu einer ungleichmäßigen Oberfläche des Formkörpers.

Es sind eine Reihe von Verfahren bekanntgeworden, bei deren Anwendung es gelingt, die Kühlzeiten zu erniedrigen und damit zu schneller entformbaren Formkörpern zu gelangen, beispielsweise durch Beschichten der expandierbaren oder vorgeschäumten Teilchen mit Paraffinöl (DE-OS 15 69 162, DE-AS 19 59 729) oder mit öllöslichen Emulgatoren (DE-OS 17 69 549). Ferner soll man zu schnellentformbaren Zellkörpern gelangen, wenn die expandierbaren Teilchen von ihrer Herstellung in feinverteilter Form geringe Mengen Wasser enthalten (DE-OS 17 19 318) oder wenn die Herstellung der expandierbaren Teilchen durch Polymerisation in Gegenwart geringer Mengen bestimmter Bromverbindungen vorgenommen wird (DE-AS 12 56 888, DE-AS 12 97 327). Eine Reihe von bekanntgewordenen Verfahren führt die Polymerisation auch in Gegenwart geringer Mengen mit Polystyrol unverträglicher Polymerisate aus (DE-OS 15 20 790, DE-OS 17 69 374, DE-OS 21 01 666, DE-OS 15 70 238, US-PS 2 857 339, US-PS 2 857 340 und bekanntgemachte japanische Patentanmeldung 71/21 453), wobei teilweise eine geringere Kühlzeit beobachtet wurde, teilweise jedoch die Zusätze praktisch keinen Einfluß auf die Kühlzeit ausüben. Als unverträgliche Polymerisate werden genannt Polyethylen, ataktisches Polypropylen, Polyisobutylen, Polyvinylidenchlorid, Mischpolymerisate aus Ethylen und Vinylacetat oder aus Styrol, Acrylnitril und N-Vinylcarbazol oder Kondensationsprodukte aus Phthalsäure und Hexantriol, ferner Elastomere, wie Butadien-Styrol-Copolymerisate, Polybutadien, Polyisopren.

Aus der DE-AS 22 55 397 ist die Verwendung von Buten-(1)-Polymerisaten oder Mischpolymerisaten als Zusatz zum Vermindern der Mindestformverweilzeit bekannt. In der gleichen Druckschrift (Vergleichsbeispiele 1 g und h) und in der EP-A-0 000 120 werden sogenannte Fischer-Tropsch-Wachse empfohlen.

Die eingesetzten hochmolekularen Verbindungen des Standes der Technik befriedigen jedoch noch nicht ausreichend, da sie entweder unansehliche blähfähige Teilchen ergeben oder keine ausreichende Verschweißung ermöglichen oder überhaupt nicht zu verminderten Kühlzeiten führen.

Insbesondere erlauben die hochmolekularen Verbindungen des Standes der Technik nicht ihren Zusatz bei der üblichen Suspensionspolymerisation bei der Herstellung der expandierbaren Styrolpolymerisate, weil sie sich nicht gleichmäßig in den Perlen verteilen oder bereits die Suspension derartig instabil machen, daß die Polymerisation gestört wird.

Es wurde nun gefunden, daß expandierbare, zur Herstellung besonders schnellentformbarer Zellkörper geeignete Styrolpolymerisate, die eine wasserunlösliche hochmolekulare Verbindung enthalten, die in den Monomeren löslich ist und mit den Styrolpolymerisaten eine nichtkontinuierliche Phase bildet, erhalten werden, wenn die Styrolpolymerisate als hochmolekulare Verbindungen ein Polyoctenamer in Mengen von 0,01 bis 2,0 Gewichtsprozent, bezogen auf Polystyrol, enthalten. Insbesondere ist das Polyoctenamer in Mengen von 0,01 bis 0,5 Gewichtsprozent enthalten.

Polyoctenamer wird bekanntlich erhalten durch Polymerisation von Cycloocten, wie z. B. beschrieben in Chemiker-Zeitung 99 (1975), Seiten 397 bis 413.

Polyactenamer weist im allgemeinen eine Lösungsviskosität von 10 bis 300 ml/g auf, was als sogenannter I-Wert bezeichnet wird ; dieser I-Wert entspricht dem 100fachen der reduzierten spezifischen Viskosität, gemessen nach DIN 53 728. Besonders geeignet sind solche Polyoctenamere mit einer Lösungsviskosität von 10 bis 400 ml/g. Der Gehalt an trans-Octylen beträgt 20 bis 90 %, vorzugsweise werden Produkte verwendet mit einem trans-Gehalt von 40 bis 80 %.

Expandierbare, verschäumbare Styrolpolymerisate sind Homo- oder auch Copolymerisate des Styrols oder p-Methylstyrols.

2

Als Comonomere kommen infrage : α-Methylstyrol, kernhalogeniertes Styrol, wei 2,4-Dichlorstyrol, Acrylnitril, Methacrylnitril, Ester, α,β-ungesättigte Carbonsäuren mit Alkoholen, die 1 bis 8 Kohlenstoffatome enthalten, wie Acrylsäure- und Methacrylsäureester und Vinylcarbazol.

Die Comonomeren sind zu höchstens 50 Gewichtsprozent in den Styrolpolymerisaten enthalten. Es können auch geringe Mengen Butadien oder Divinylbenzol als Comonomere verwendet werden.

Als Treibmittel enthalten die verschäumbaren Styrolpolymerisate die üblichen gasförmigen oder flüssigen organischen Verbindungen, die das Styrolpolymerisat nicht lösen bzw. lediglich quellen und deren Siedepunkte unterhalb des Erweichungspunktes der Polymerisate liegen.

Solche Verbindungen sind beispielsweise aliphatische Kohlenwasserstoffe, wie Propan, Butan, Pentan, Hexan ; cycloaliphatische Kohlenwasserstoffe wie Cyclohexan ; weiterhin Halogenkohlenwasserstoffe wie Dichlordifluormethan oder 1,2,2-Trifluor-1,1,2-trichlorethan.

Auch Mischungen dieser Verbindungen können verwendet werden.

Gegebenenfalls können auch Lösungsmittel wie Methanol oder Ethanol im Gemisch mit Kohlenwasserstoffen und/oder Halogenkohlenwasserstoffen als Treibmittel eingesetzt werden.

Die Treibmittel werden in Mengen von 3 bis 15 Gewichtsprozent, insbesondere von 5 bis 7 Gewichtsprozent, bezogen auf das Polymerisat, verwendet.

Die blähfähigen Styrolpolymerisate werden, insbesondere durch Suspensionspolymerisation des monomeren Styrols und gegebenenfalls der Comonomeren in Gegenwart üblicher Aktivatoren, wie Peroxiden oder Azoaktivatoren und Suspensionsstabilisatoren wie Tricalciumphosphat oder organischen Kolloiden wie Polyvinylalkohol, Polyvinylpyrrolidon oder Hydroxyethylcellulose in Gegenwart der genannten Treibmittel und der genannten Polyoctenamere und gegebenenfalls weiterer hochmolekularer Verbindungen, die eine diskontinuierliche Phase bilden, erhalten. Es ist jedoch auch möglich, die blähfähigen Styrolpolymerisate beispielsweise nach dem Massepolymerisationsverfahren herzustellen. Ferner ist es möglich, treibmittelfreie Styrolpolymerisate, welche die genannten hochmolekularen Verbindungen bereits enthalten und die nach dem bekannten Masse- bzw. Suspensionsverfahren in Form von Granulaten oder Perlen erhalten worden waren, nachträglich mit den genannten Treibmitteln gegebenenfalls in wäßriger Suspension oder auch nach dem Aufschmelzen in einem Extruder zu imprägnieren, wobei im zuletzt genannten Fall die den Extruder verlassenden Stränge unter Vermeiden des Aufschäumens zerkleinert werden.

Da das Polyoctenamer in Styrol homogen löslich ist, liegt es auch in dem Styrolpolymerisat in gleichmäßiger Verteilung vor.

Die kühlzeitverkürzende Wirkung des Polyoctenamers tritt auch ein, wenn die Molekulargewichte der Styrolpolymerisate niedriger als sonst üblich sind.

Eine derartige Erniedrigung des Molekulargewichtes, ausgedrückt durch den K-Wert, kann durch den Zusatz regelnder Substanzen bei der Polymerisation erreicht werden, beispielsweise seien genannt dimeres α-Methylstyrol oder tert. Dodecylmercaptan. Diese regelnden Substanzen werden in Mengen von 0,005 bis 0,05 Gewichtsprozent, insbesondere 0,01 bis 0,03 Gewichtsprozent, bezogen auf das Gemisch aus Monomeren und Polyoctenamer, eingesetzt.

Die expandierbaren Styrolpolymerisate können außerdem Flammschutzmittel, Weichmacher, Stabilisierungsmittel, Antistatika, Farbstoffe oder Füllstoffe enthalten.

### Beispiel

In einem druckfesten Rührkessel aus korrosionsfreiem Stahl wurde eine Mischung aus 100 Gewichtsteilen vollentsalztem Wasser, 100 Gewichtsteilen vollentsalztem Wasser, 100 Gewichtsteilen Styrol, 0,4 Gewichtsteilen Benzoylperoxid, 0,1 Gewichtsteilen tert.-Butylperbenzoat, 0,75 Gewichtsteilen hexabromcyclododecan, 0,30 Gewichtsteilen Dicumylperoxid sowie die in der Tabelle angegebene Art und Menge der Zusätze (in Styrol gelöst) unter Rühren auf 90 °C erhitzt. Nach 2 Stunden bei 90 °C wurden 5 Teile einer 2 %igen wäßrigen lösung von Polyvinylalkohol zugegeben. Nach weiteren 2 Stunden erfolgte die Zugabe von 7 Gewichtsteilen eines Gemisches aus iso- und n-Pentan als Treibmittel innerhalb von 10 bis 15 Minuten. Der Ansatz wurde nach einer weiteren Stunde bei 90 °C auf 120 °C aufgeheizt und 6 Stunden bei dieser Temperatur gehalten.

Nach Beendigung des Polymerisationszycluses wurde abgekühlt, das entstandene Perlpolymerisat von der wäßrigen Phase abgetrennt, getrocknet und gesiebt.

Die Perlfraktion zwischen 1 und 2 mm Durchmesser wurde in einem kontinuierlichen Rührvorschäumer Typ Rauscher mit strömendem Wasserdampf auf ein Schüttgewicht von 15 g/l vorgeschäumt, 24 Stunden zwischengelagert und anschließend in einer Blockform mit den Abmessungen 100 × 50 × 100 cm Typ Rauscher zu Schaumstoffblöcken ausgeschäumt. Die Prüfwerte sind in der Tabelle zusammengestellt.

Tabelle

| Bei-spiel | Zusatz | Gewichts-teile | Schütt-gewicht $[g/l]$ | Bedampfungs-druck[1] $[bar]$ | Mindestform-verweilzeit[2] $[min]$ | Schrumpf[3] $[%]$ |
|---|---|---|---|---|---|---|
| 1 | Polyoctenamer I 120 ml/g trans-Gehalt 60 % | 0,10 | 16,4 | 1,95 | 17 | 0,8 |
| 2 | Polyoctenamer I 120 ml/g trans-Gehalt 60 % | 0,20 | 15,1 | 1,95 | 9 | 1,2 |
| 3 | Fischer-Tropsch-Wachs (EP-A-O 000 120) | 0,20 | 15,7 | 1,95 | 16 | 1,2 |
| 4 | Ethylen-Vinyl-acetat-Copolymeres (JP-A-71/21 453) | 0,20 | Suspensionsinstabilität | | | |

Beispiele 3 und 4 sind Vergleichsbeispiele

[1]) Dampfdruck in der Blockform.

[2]) Zeitraum, nach dem man frühestens den Formkörper nach der Bedampfung der Form entnehmen kann, ohne daß dieser nachbläht. Als Kriterium dient der Abbau des Blockinnendrucks auf nahezu Atmosphärendruck.

[3]) Als Blockschrumpf wird das Einfallen der Seitenflächen verstanden, das 24 Stunden nach der Herstellung des blockes gemessen wird. Der Blockschrumpf wird ermittelt, indem man die Blockdicke von der Mitte einer großen Seitenfläche zur gegenüberliegenden rechtwinkelig zu diesen Seitenflächen mißt, Die Differenz des lichten Formmaßes an dieser Stelle und der Blockdicke an dieser Stelle in Prozent des lichten Formmaßes umgerechnet ergibt den Blockschrumpft.

**Patentansprüche**

1. Expandierbare, zur Herstellung schnellentformbarer Zellkörper geeignete Styrolpolymerisate, die eine wasserunlösliche, hochmolekulare Verbindung enthalten, die in den Monomeren löslich ist und mit den Styrolpolymerisaten eine nichtkontinuierliche Phase bildet, dadurch gekennzeichnet, daß die in den Styrolpolymerisaten enthaltene hochmolekulare Verbindung ein Polyoctenamer darstellt, das in Mengen von 0,01 bis 2,0 Gewichtsprozent, bezogen auf Polystyrol, enthalten ist.

2. Expandierbare Styrolpolymerisate nach Anspruch 1, dadurch gekennzeichnet, daß das Polyoctenamer lösungsviskositäten von 10 bis 400 ml/g (I-Wert) und einen trans-Octylen-Gehalt von 40 bis 80 % aufweist.

3. Verfahren zur Herstellung der expandierbaren Styrolpolymerisate, die zur Herstellung von schnellentformbaren Zellkörpern geeignet sind, durch Polymerisieren von Styrol, gegebenenfalls zusammen mit anderen olefinisch ungesättigten monomeren polymerisierbaren Verbindungen in wäßriger Suspension unter intensiver mechanischer Bewegung in Gegenwart eines Treibmittels und in Gegenwart einer wasserunlöslichen hochmolekularen Verbindung, die in den Monomeren löslich ist und mit dem Polymerisat eine nichtkontinuierliche Phase bildet, dadurch gekennzeichnet, daß man die hochmolekulare Verbindung in Mengen von 0,01 bis 2,0 Gewichtsprozent, bezogen auf Styrol bzw. die Gesamtheit der polymerisierbaren Monomeren, verwendet und diese ein Polyoctenamer darstellt.

4. Verfahren nach Anspruch 3, dadurch gekennzeichnet, daß man ein Polyoctenamer mit Lösungsviskositäten von 10 bis 400 ml/g (I-Wert) und einem trans-Octylen-Gehalt von 40 bis 80 % verwendet.

5. Verwendung der expandierbaren Styrolpolymerisate nach den Ansprüchen 1 bis 4 zur Herstellung schnellentformbarer Zellkörper.

**Claims**

1. An expandable styrene polymer suitable for the production of rapidly demouldable foamed products and containing a water-insoluble high molecular weight compound which is soluble in the monomer(s) and forms a non-continuous phase with the styrene polymer, characterised in that the high molecular weight compound contained in the styrene polymer is a polyoctenamer which is present in an amount of 0.01 to 2.0 % by weight, based on the styrene polymer.

2. An expandable styrene polymer according to claim 1, characterised in that the polyoctenamer has a solution viscosity of 10 to 400 ml/g (I value) and a trans-octylene content of 40 to 80 %.

3. A process for the production of an expandable styrene polymer, which is suitable for the production of rapidly demouldable foamed products, by polymerisation of styrene, optionally together with one or more other olefinically unsaturated compounds polymerisable as monomers, in aqueous suspension under intensive mechanical agitation in the presence of a blowing agent and in the presence of a water-insoluble high molecular weight compound which is soluble in the monomer(s) and forms a non-continuous phase with the polymer, characterised in that the high molecular weight compound is used in an amount of 0.01 to 2.0 % by weight, based on styrene or on the total amount of polymerisable monomers, as the case may be, and this compound is a polyoctenamer.

4. A process according to claim 3, characterised in that a polyoctenamer with a solution viscosity of 10 to 400 ml/g (I value) and a trans-octylene content of 40 to 80 % is used.

5. The use of an expandable styrene polymer according to any of claims 1 to 4 for the production of readily demouldable foamed products.

**Revendications**

1. Produits de polymérisation de styrène expansibles, appropriés à la fabrication du corps alvéolaires pouvant se démouler rapidement, qui contiennent un composé de poids moléculaire élevé qui est insoluble dans l'eau mais est soluble dans les monomères et forme avec les produits de polymérisation de styrène une phase non continue, caractérisés par le fait que le composé de poids moléculaire élevé contenu dans les produits de polymérisation de styrène constitue un poly-octénamère qui est contenu à raison de 0,01 à 2,0 % en poids relativement au polystyrène.

2. Produits de polymérisation de styrène expansibles selon la revendication 1, caractérisés par le fait que le poly-octénamère présente des viscosités en solution de 10 à 400 ml/g (valeur I) et une teneur en trans-octylène de 40 à 80 %.

3. Procédé pour la préparation des produits de polymérisation de styrène expansibles qui sont appropriés à la fabrication de corps alvéolaires pouvant se démouler facilement, par polymérisation de styrène, éventuellement en même temps que d'autres composés monomères polymérisables, à insaturation oléfinique, en suspension aqueuse, sous agitation mécanique intense, en présence d'un porogène et en présence d'un composé de poids moléculaire élevé qui est insoluble dans l'eau, mais est soluble dans le monomère et forme avec le produit de polymérisation une phase non continue, caractérisé par le fait que l'on utilise le composé de poids moléculaire élevé à raison de 0,01 à 2,0 % en poids relativement au

**0 134 414**

styrène ou à la totalité des monomères polymérisables et que celui-ci constitue un poly-octénamère.

4. Procédé selon la revendication 3, caractérisé par le fait que l'on utilise un poly-octénamère ayant des viscosités en solution de 10 à 400 ml/g (valeur I) et une teneur en trans-octylène de 40 à 80 %.

5. Utilisation des produits de polymérisation de styrène expansibles selon les revendications 1 à 4 pour la fabrication de corps alvéolaires pouvant se démouler rapidement.

6